# EUROPÄISCHE PATENTSCHRIFT

(11) **EP 1 504 299 B1**
(45) Veröffentlichungstag und Bekanntmachung des Hinweises auf die Patenterteilung: **05.05.2010**
(21) Anmeldenummer: 03720009.4
(22) Anmeldetag: 09.05.2003
(51) Int. Cl.: G02B 6/50

(54) **EINRICHTUNG ZUR ABSTÜTZUNG BZW. FÜHRUNG VON LEITUNGEN IN KANÄLEN**
DEVICE FOR SUPPORTING OR GUIDING LINES IN CHANNELS
SYSTEME POUR SUPPORTER OU GUIDER DES CONDUITES DANS DES CANAUX

(30) Priorität: 10.05.2002 AT 7242002
(43) Veröffentlichungstag der Anmeldung: 09.02.2005
(73) Patentinhaber: CableRunner Austria GmbH, 1230 Wien (AT)
(72) Erfinder: KÜBEL, Johann, A-3072 Kasten (AT); KADRNOSKA, Helmut, A-1220 Wien (AT); REISS, Gerhard, A-1130 Wien (AT)
(74) Vertreter: Wildhack & Jellinek
(86) Internationale Anmeldenummer: PCT/AT2003/000133
(87) Internationale Veröffentlichungsnummer: WO 2003/096098

(56) Entgegenhaltungen:
- EP-A- 1 011 180
- DE-A- 19 836 923
- DE-U- 29 801 424
- GB-A- 2 163 302
- US-A- 3 053 358
- US-A- 4 023 834
- US-A- 5 240 209
- US-B1- 6 191 363

## Beschreibung

Die Erfindung betrifft eine Einrichtung zur Abstützung bzw. Führung von Leitungen in Kanälen, insbesondere in Abwasserkanälen, gemäß dem Oberbegriff des Anspruches 1.

Unter dem Begriff "Leitungen" werden vor allem Kabel, und zwar insbesondere Glasfaserkabel, aber auch andere stromführende und/oder ein flüssiges oder gasförmiges Medium transportierende Leitungen verstanden.

In letzter Zeit besteht zunehmend der Bedarf, Glasfaserleitungen zu einzelnen Grundstücken bzw. den auf diesen Grundstücken befindlichen Gebäuden zu verlegen. Um Aufgrabungen weitgehend zu vermeiden, ist es bekannt, diese Leitungen in bestehenden Abwasserkanälen anzuordnen. Insbesondere in begehbaren Hauptkanälen werden zu diesem Zweck an der Kanalwand Kabeltassen befestigt, auf welchen die Glasfaserkabel abgestützt sind. Bei nicht begehbaren, aus Rohren zusammengesetzten Kanälen, bei welchen in bestimmten Abständen zur Oberfläche führende Putz- bzw. Revisionsschächte vorgesehen sind, stößt die Anordnung bisher üblicher Kabeltassen jedoch auf Schwierigkeiten. Es ist zwar möglich, Kabelführungen über die Schächte in derartige Abwasserkanäle einzuführen, die Anordnung solcher Führungen in den Abwasserkanälen ist jedoch insbesondere auch deshalb schwierig, da Kanalabzweigungen, beispielsweise zu Hausanschlüssen, von solchen Kabelführungen freigehalten werden müssen, um Verstopfungen durch sich an solchen Kabelführungen festsetzenden Feststoffen zu verhindern.

Aus der AT 408 139 B ist es bekannt geworden, flexible Rohrleitungen in aus Abschnitten zusammengesetzten Trägerprofilen abzustützen, die aus einem Boden und aus von diesem abstehenden, einstückig mit dem Boden verbundenen Seitenwangen bestehen. Die einzelnen Abschnitte sind endseitig über einsetzbare Verbindungselemente fluchtend miteinander koppelbar. Durch diese Ausbildung ist es möglich, Rohrleitungen, insbesondere aus Kunststoff, die einer beträchtlichen Wärmedilatation unterliegen, aufzunehmen und die dadurch entstehenden Längenänderungen der Rohrleitung auszugleichen.

Aus der US 3053358 ist eine Einrichtung zur Führung von Kabeln in Kanälen bekannt, welche mit miteinander gelenkig verbundenen Einzelgliedern gebildet sind. Bei dieser Einrichtung, welche keinen durchgehenden flexiblen Boden zur Abstützung der Kabel, sondern nur in Abständen voneinander angeordnete, die beiden Seitenwangen verbindende Sprossen, sind die einzelnen Glieder über jeweils zwei, jeweils eine zu dem Verlauf der "horizontalen" Sprossen parallele Achse aufweisende, in jeder der Seitenwangen angeordnete Gelenke miteinander verbunden.

Diese bekannte Anordnung hat einerseits den Nachteil, dass pro Glied zwei Gelenksverbindungen notwendig sind und anderseits, dass dort nur eine "vertikale" Auf/Ab-Verschwenkung der Glieder in Richtung der Erstreckung der Seitenwangen möglich ist, während eine Verschwenkung in Richtung der Sprossen unmöglich ist.

Der DE 29801424 U1 ist eine Vorrichtung zur Fixierung eines Kabels insbesondere eines optischen Kabels an einer Innenwand eines nicht begehbaren Abwasserrohres beschrieben, welche durch ein flaches Hohlprofil gebildet ist, in dessen Hohlraum das Kabel befindlich ist, wobei vorgesehen ist, dass das Hohlprofil mit einer seiner Flachseiten an der Innenwand des Abwasserrohres anliegend befestigt ist.

Schließlich betrifft die US 6191363 B1 eine sesselleisten-artige Führung für Kabel an Wänden nahe dem Fußboden mit Grundplatte und von derselben abstehenden Klammerelementen, in welche die Kabel eingeschoben und von denselben gehalten werden können, sowie mit einer einschnappfähigen Abdeckung für die Führungs-Leiste und die in ihr angeordneten Kabel.

Die vorliegende Erfindung hat sich zur Aufgabe gestellt, eine Einrichtung zur Abstützung bzw. Führung von Leitungen in Kanälen, insbesondere in Abwasserkanälen, zu schaffen, die mittels eines Kanalroboters an der Wand auch von nicht begehbaren Abwasserkanälen fixiert und dabei an die jeweiligen Erfordernisse angepasst werden kann. So ist es nötig, dass eine Fixierung der Kabeltassen in einer Lage erfolgt, in der der Durchfluss im Kanal nicht behindert wird, somit möglichst im Scheitel des Kanals, wobei jedoch eine Veränderung der jeweiligen Lage im Bereich von Einmündungen in den Kanal möglich sein muss, um Behinderung des Zuflusses zu vermeiden.

Zur Lösung dieser Aufgabe schlägt die Erfindung vor, eine Einrichtung gemäß den kennzeichnenden Merkmalen des Anspruches 1 vor. Diese Ausbildung ermöglicht es, den Kabelkanal in der Ebene des Bodens zu verschwenken, wobei sich die einzelnen Segmente um die gelenkige Verbindung verdrehen und die Seitenwangen infolge ihrer Ausbildung aus biegbarem Material der Lage der den Boden bildenden Segmente anpassen. Dadurch ist es möglich, dass die Kabeltasse den gewünschten Verlauf aufweist.

Die erfindungsgemäße Ausbildung ermöglicht aber auch den einfachen Zusammenbau der Kabeltasse im Bereich eines Schachtes. Die Segmente werden dabei um die gelenkige Verbindung so verschwenkt, dass sie, übereinander angeordnet, einen Stapel bilden, der über den Schacht zur Kanalmündung eingeführt werden kann, wo der Segmentstapel entfaltet und die einzelnen Segmente mit den biegbaren und daher als Rolle transportierbaren Seitenwangen verbunden werden. Dazu sind erfindungsgemäß die Seitenwangen mit seitlichen Schlitzen versehen, in welchen die Ränder der den Boden bildenden Segmente aufgenommen sind.

Vorzugsweise sind dabei die vom Schlitz aufgenommenen Ränder der Segmente bogenförmig gekrümmt, sodass diese Ränder durch Verschwenken der Seitenwangen entlang des Krümmungsradius in die Schlitze eingeführt und in der Folge sicher mit den Seitenwangen verbunden sind.

Gemäß einer bevorzugten Ausführungsform der Erfindung sind benachbarte Segmente durch Hohlnieten, um deren etwa senkrecht zur Ebene des Bodens verlaufende Achse verschwenkbar, verbunden. Dadurch wird auf einfache Weise eine gelenkige Verbindung der einzelnen Segmente erzielt, wobei dann, wenn die Köpfe der Hohlnieten versenkt angeordnet sind, auch keine den Durchfluss im Kanal störende Vorsprünge vorhanden sind. Vor allem aber weist diese Ausbildung den Vorteil auf, dass durch diese Hohlnieten in der Kanalwand verankerbare Befestigungsmittel, vorzugsweise selbstschneidende Schrauben, hindurchgeführt werden können.

In den Kabeltassen sind zweckmäßig Rohre abgestützt, die mehrere Kanäle zur Aufnahme, insbesondere von Glasfaserleitungen besitzen.

Um aber auch nachträglich zusätzliche Leitungen an bereits montierten Kabeltassen anbringen zu können, ist erfindungsgemäß zumindest eine Seitenwange mit mindestens einer in Längsrichtung der Leitung durchlaufenden Kammer versehen, welche eine solche zusätzliche Leitung aufnehmen kann. Um das Einführen einer solchen zusätzlichen Leitung zu erleichtern, weist die Kammer zweckmäßig eine seitliche, vorzugsweise über wenigstens eine elastische Lippe zumindest teilweise verschließbare Öffnung auf. Die elastische Lippe verhindert nach dem Einsetzen der zusätzlichen Leitung ein Austreten derselben aus der Kammer.

Bei einer bevorzugten Ausführungsform der Erfindung ist in der Kabeltasse ein vom Boden abstehender, vorzugsweise die Hohlnieten abdeckender, Abstandhalter vorgesehen. Dieser Abstandhalter trennt zwei in die Kabeltasse eingelegte Leitungen bzw. solche Leitungen aufnehmende Rohre und verhindert, wenn er oberhalb der Hohlnieten angeordnet ist, durch welche die Befestigungsmittel hindurchgeführt sind, eine Beschädigung der Leitungen bzw. Rohre durch diese Befestigungsmittel, da diese dann den Abstandhalter durchdringen. Vorzugsweise besteht der Abstandhalter aus Schaumstoff, der eine elastische Abstützung der Leitungen bzw. Rohre bewirkt und sich dem Verlauf der Kabeltasse anpasst.

Wird als Befestigungsmittel eine selbstschneidende Schraube verwendet, so ist gemäß einem weiteren Merkmal der Erfindung diese entlang eines Gewindeabschnittes mit einer Dichtmasse, vorzugsweise aus Silikon, umgeben. Diese Dichtmasse bewirkt beim Einschrauben der selbstschneidenden Schraube eine Abdichtung der Kanalwand im Bereich der Einschrauböffnung.

Wie bereits erwähnt, wird die Kabeltasse zwischen zur Oberfläche führenden, mit dem Kanal verbundenen Schächten in diesem Kanal angeordnet. Um im Bereich dieser Schächte eine einwandfreie Verbindung mit einer im anschließenden Kanal weiterführenden Leitung einerseits und Abzweigleitungen anderseits zu ermöglichen, ohne dass hiebei unzulässig enge Krümmungsradien auftreten, welche insbesondere bei Verwendung von Glasfaserleitungen diese beschädigen würden, steht bei der erfindungsgemäßen Einrichtung die Kabeltasse mit einem in einem solchen Schacht vorgesehenen Klemmkasten in Verbindung, der einen die Leitungen aufnehmenden, mit der Kabeltasse kuppelbaren Ansatz aufweist. Dieser Ansatz kann so geformt sein, dass die in diesem Ansatz geführten Leitungen keinen unzulässigen Krümmungsradius aufweisen. Insbesondere bei Glasfaserleitungen können diese einzeln in diesem Ansatz geführt sein und mit ihren Enden über im Klemmkasten angeordnete Klemmen mit weiterführenden Leitungen verbunden werden.

Der Klemmkasten kann weiters in seinem den Ansatz aufweisenden Endbereich an seiner Außenseite mit einer gerundeten Führungsfläche versehen sein, über welche ein bei Reinigung eines Kanals in diesen einzuführender Hochdruckreinigungsschlauch geführt ist. Dadurch ist die bisher notwendige Anordnung von Umlenkrollen für den Reinigungsschlauch nicht mehr erforderlich, welche in dem Übergangsbereich zwischen dem Schacht und der Kanalwand über gesonderte Lagerböcke fixiert werden mussten. Um ein seitliches Abgleiten des Hochdruckreinigungsschlauches von der Führungsfläche zu verhindern, ist diese durch abstehende seitliche Wangen begrenzt.

Es kann aber auch der Klemmkasten mit seitlich abstehenden Zapfen versehen sein, welche zur Verankerung bzw. Lagerung von Umlenkrollen für einen Hochdruckreinigungsschlauch dienen.

In der Zeichnung ist die Erfindung anhand eines Ausführungsbeispieles schematisch veranschaulicht.

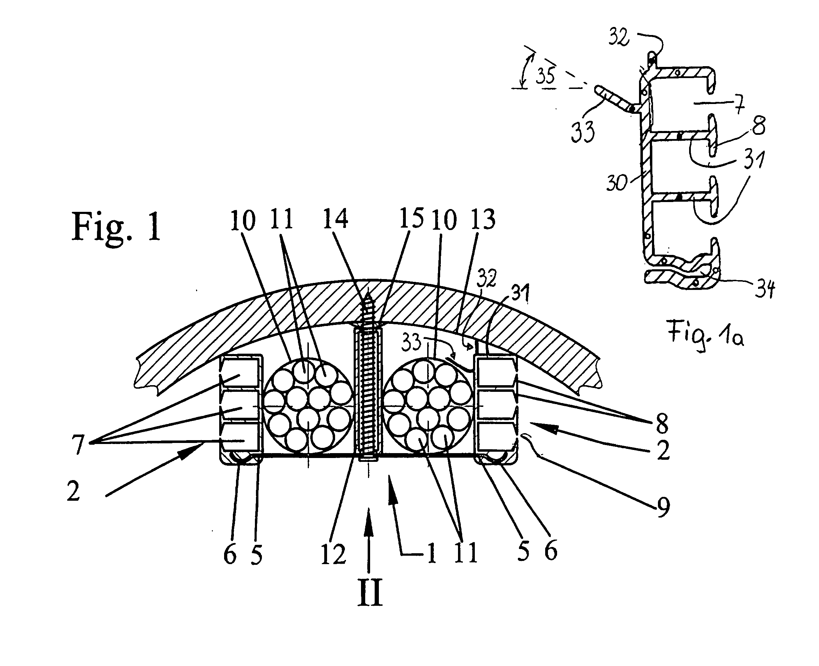

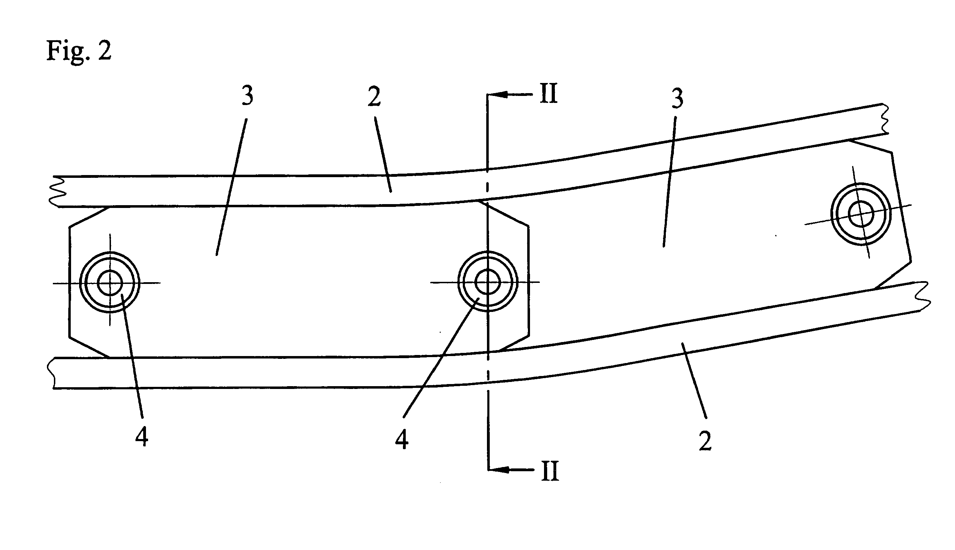

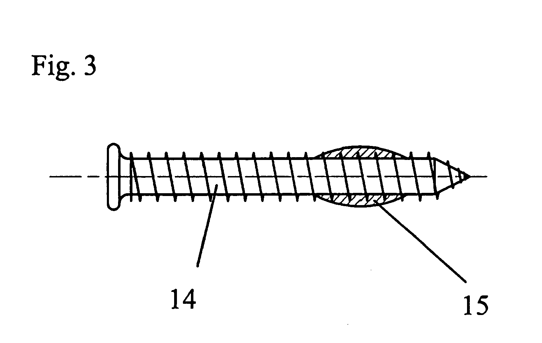

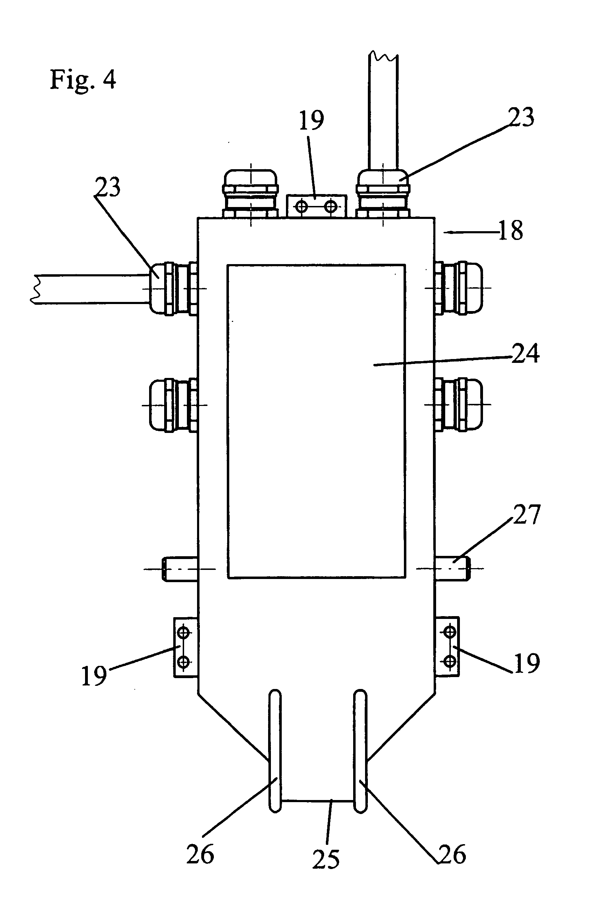

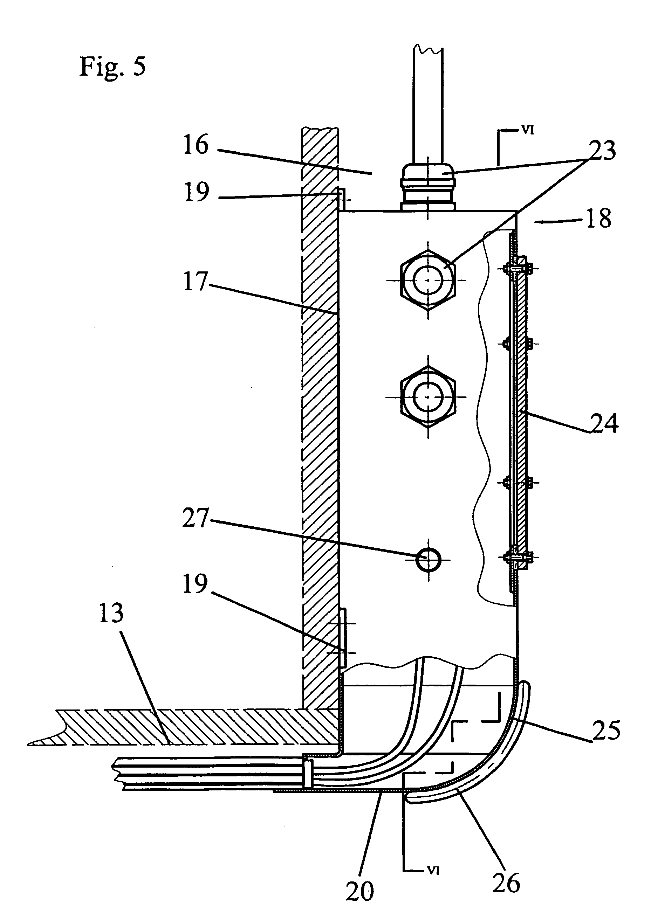

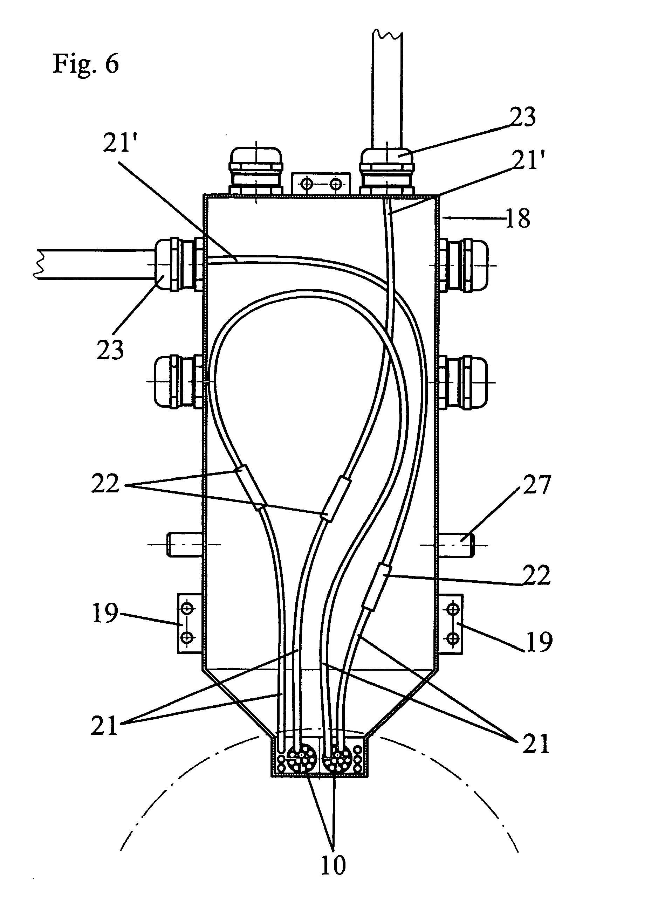

Fig. 1 zeigt einen Schnitt durch die Kabeltasse einer erfindungsgemäßen Einrichtung nach der Linie I-I in Fig. 2 und Fig. 2 stellt eine Unteransicht auf diese Kabeltasse in Richtung des Pfeiles II in Fig. 1 dar. Fig. 1a zeigt einen schematischen Schnitt durch eine Seitenwange. Fig. 3 zeigt eine selbstschneidende Schraube zur Befestigung der Kabeltasse an einer Kanalwand. Fig. 4 stellt einen in einem Schacht angeordneten Klemmkasten in Vorderansicht und Fig. 5 in Seitenansicht, teilweise im Schnitt, dar. Fig. 6 zeigt einen Schnitt nach der Linie VI-VI in Fig. 5.

Die erfindungsgemäße Einrichtung zur Abstützung bzw. Führung von Leitungen in Abwasserkanälen umfasst eine in den Fig. 1 und 2 dargestellte Kabeltasse, die aus einem Boden 1 und von diesem abstehenden Seitenwangen 2 gebildet ist. Wie aus Fig. 2 hervorgeht, besteht der Boden 1 aus einzelnen Segmenten 3 aus Metallblech, die über Hohlnieten 4 gelenkig miteinander verbunden sind, deren Köpfe in den Segmenten 3 versenkt angeordnet sind, sodass sie nicht vorstehen und den Kanaldurchfluss nicht behindern.

Die Seitenwangen 2 sind aus einem biegbaren Kunststoffmaterial gebildet und mit seitlichen Schlitzen 5 versehen, in welchen die bogenförmig gekrümmten Ränder 6 der Segmente 3 aufgenommen sind. Durch Verschwenken der Seitenwangen 2 etwa um den Krümmungsradius der Ränder 6 der Segmente 3 können diese Ränder in die seitlichen Schlitze 5 eingeführt werden und sind dann sicher in den Seitenwangen 2 verankert.

Wie aus Fig. 1 ersichtlich ist, sind die Seitenwangen 2 mit durchlaufenden Kammern 7 versehen, die seitliche, durch elastische Lippen 8 teilweise verschließbare Öffnungen 9 aufweisen, über welche nachträglich zusätzliche Leitungen in den Kabeltassen abgestützt werden können, welche über die Öffnungen 9 einsetzbar sind.

Im Raum zwischen den Seitenwangen 2 sind zwei Rohre 10 angeordnet, welche Kanäle 11 einschließen, in denen Leitungen, vorzugsweise Glasfaserkabel, geführt sind. Die Rohre 10 sind durch einen Abstandhalter 12 voneinander getrennt, der aus Hartschaumstoff besteht und daher die Rohre 10 elastisch abstützt und sich der Krümmung der Kabeltasse anzupassen vermag. Der Abstandhalter 12 ist oberhalb der Hohlnieten 4 angeordnet.

Zur Befestigung der Kabeltasse an der Kanalwand 13 sind in Fig. 3 im Detail dargestellte, selbstschneidende Schrauben 14 vorgesehen, die Hohlnieten 4 durchsetzen, durch den Abstandhalter 12 hindurchgeführt und in der Kanalwand 13 verankert sind. Jede selbstschneidende Schraube ist entlang eines Gewindeabschnittes mit einer Silikonmasse 15 umgeben, die, wie aus Fig. 1 hervorgeht, nach dem Einschrauben eine Abdichtung des Schraubloches in der Kanalwand 13 bewirkt.

Wie aus den Fig. 4 bis 6 hervorgeht, mündet der Kanal in einen mit der Oberfläche in Verbindung stehenden Putz- bzw. Revisionsschacht 16, wobei im Bereich der Mündung an der Schachtwand 17 ein Klemmkasten 18 angeordnet ist. Die Befestigung des Klemmkastens 18 an der Schachtwand 17 erfolgt über Laschen 19 durchsetzende Schrauben. Der Klemmkasten 18 ist über einen Ansatz 20 mit der vom Boden 1 und den Seitenwangen 2 gebildeten Kabeltasse kuppelbar, der so geformt ist, dass die einzelnen Glasfaserkabel 21 eine solche Krümmung aufweisen, dass eine Beschädigung vermieden wird. Im Inneren des Klemmkastens 18 erfolgt eine Verbindung der einzelnen Glasfaserkabel 21 über Muffen 22, wobei entweder eine Weiterführung der Glasfaserkabel in einem anschließenden Kanalabschnitt erfolgt oder eine Abzweigleitung 21' angeschlossen ist, die über einen Würgenippel 23 in den Schacht 16 austritt und dort entlang der Schachtwand weitergeführt ist. Der Klemmkasten ist durch einen Deckel 24 flüssigkeitsdicht abgeschlossen.

Im Bereich des Ansatzes 20 weist der Klemmkasten 18 an seiner Außenseite eine gerundete Führungsfläche 25 auf, die seitlich durch abstehende Wangen 26 begrenzt ist. Diese Führungsfläche 25 dient zur Abstützung eines in den Kanal über den Schacht 16 einführbaren Hochdruckreinigungsschlauches und verhindert infolge seiner Rundung eine Beschädigung desselben an der Umlenkstelle, wobei durch die seitlichen Wangen 26 ein Abgleiten dieses Hochdruckreinigungsschlauches von der Führungsfläche 25 verhindert wird.

Weiters sind von gegenüberliegenden Seitenflächen des Klemmkastens 18 abstehende Zapfen 27 vorgesehen, an welchen, falls erforderlich; Umlenkrollen für einen Hochdruckreinigungsschlauch oder Stützen für solche Umlenkrollen gelagert bzw. befestigt werden können.

Fig. 1a zeigt einen schematischen Schnitt durch eine Seitenwange mit gegenüber Fig. 1 vergrößerten Maßstab. Die Seitenwange 2 besitzt eine Basis 30, von der insbesondere parallele Stege 31 abgehen, die in den Lippen 8 enden. Diese elastischen Lippen 8 begrenzen die Kammern 7, die zwischen den Stegen 31 ausgebildet sind. In Fig. 1a ist auch die Ausnehmung 34 ersichtlich, in die der Boden 1 mit seinem gekrümmten Endbereich 6 einsetzbar ist.

Für eine gute Anlage an eine Wand, insbesondere Decke, an der die Einrichtung montiert werden soll, ist im bodenfernen Endbereich der Seitenwange 2 eine vorzugsweise senkrecht zum Boden 1 verlaufende Distanznase 32 angeformt; diese Distanznase könnte prinzipiell auch die Basis 30 verlängern. Soferne der Boden 1 mit der vorgesehenen Schraube 14 an einer Wand befestigt wird, so wird diese Distanznase 32 gegen die Wand gedrückt und ergibt damit eine Abdichtung bzw. verhindert gleichzeitig, dass der bodenfernste Steg 31 der Seitenwange 2 allzu sehr bei kleineren Krümmungen der Wandfläche abgebogen und die Öffnung 9 der bodenfernsten Kammer 7 verschlossen und damit ein Einlegen von Leitungen beträchtlich erschwert wird. In Fig. 1 ist diese Distanznase 32 schematisch angedeutet.

Des weiteren kann von der Basis 30 ein insbesonders biegsamer bzw. nachgiebiger bzw. federnder Flansch 33 abgehen, und zwar in Richtung auf das Innere der Einrichtung. Dieser Flansch schließt mit dem Boden bzw. einer Senkrechten zur Basis 30 einen Winkel 35 ein, der etwa 0 bis 60° beträgt. Dieser federnde Flansch hat die Aufgabe, das bzw. die Rohr(e) 10 im Inneren eines Kanals 11 elastisch bzw. nachgiebig abzustützen bzw. festzulegen, so wie dies aus Fig. 1 ersichtlich ist.

Die Distanznase 32 und der federnde Flansch 33 können einstückig an die Seitenwange 2 angeformt werden und bestehen im wesentlichen aus dem selben Material.

Sowohl die Distanznase 32 als auch der federnde Flansch 33 können sich kontinuierlich bzw. ununterbrochen über die Länge der Seitenwange 2 erstrecken; prinzipiell können diese Teile auch abschnittsweise ausgebildet sein bzw. sich über aufeinanderfolgende Teilbereiche auf der Seitenwange 2 erstrecken.

## Patentansprüche

1. Einrichtung zur Abstützung bzw. Führung von Leitungen in Kanälen, insbesondere in Abwasserkanälen, beinhaltend eine die Leitungen aufnehmende, aus einzelnen miteinander gelenkig verbundenen Segmenten (3) bestehende Kabeltasse, die jeweils einen Boden (1) aufweist, von dem Seitenwangen (2) abstehen, **dadurch gekennzeichnet, dass** die, vorzugsweise aus Metallblech bestehenden, Böden (1) von jeweils einander benachbarten Segmenten (3) - um eine im Wesentlichen senkrecht zur Ebene der Böden (1) verlaufende Achsen schwenkbar - miteinander gelenkig verbunden sind, und dass die abstehenden Seitenwangen (2) aus einem biegbaren Material, vorzugsweise aus Kunststoff, gebildet sind und seitliche Schlitze (5) aufweisen, in welchen die seitlichen Ränder (6) der Böden (1) der Segmente (3) aufgenommen sind.

2. Einrichtung nach Anspruch 1, **dadurch gekennzeichnet, dass** die von den Schlitzen (5) aufgenommenen Ränder (6) der Böden der Segmente (3) bogenförmig gekrümmt sind.

3. Einrichtung nach Anspruch 1 oder 2, **dadurch gekennzeichnet, dass** jeweils einander benachbarte Segmente (3) mittels Hohlnieten (4), um deren etwa senkrecht zur Ebene der Böden (1) verlaufende Achse schwenkbar, miteinander verbunden sind.

4. Einrichtung nach einem der Ansprüche 1 bis 3, **dadurch gekennzeichnet, dass** die Hohlnieten (4) von in der Kanalwand (13) verankerbaren Befestigungsmitteln, vorzugsweise selbstschneidenden Schrauben (14), durchsetzt sind.

5. Einrichtung nach einem der Ansprüche 1 bis 4, **dadurch gekennzeichnet, dass** zumindest eine Seitenwange (2) mit wenigstens einer in Längsrichtung der Leitung durchlaufenden Kammer (7) versehen ist.

6. Einrichtung nach Anspruch 5, **dadurch gekennzeichnet, dass** die Kammer (7) eine seitliche, vorzugsweise über wenigstens eine elastische Lippe (8) zumindest teilweise verschließbare, Öffnung (9) aufweist.

7. Einrichtung nach einem der Ansprüche 1 bis 6, **dadurch gekennzeichnet, dass** in der Kabeltasse ein vom Boden (1) abstehender, vorzugsweise die Hohlnieten (4) abdeckender, Abstandhalter (12) vorgesehen ist.

8. Einrichtung nach Anspruch 7, **dadurch gekennzeichnet, dass** der Abstandhalter (12) aus Hartschaumstoff besteht.

9. Einrichtung nach einem der Ansprüche 1 bis 8, **dadurch gekennzeichnet, dass** die selbstschneidende Schraube (14) entlang eines Gewindeabschnittes mit einer Dichtmasse (15), vorzugsweise aus Silikon, umgeben ist.

10. Einrichtung nach einem der Ansprüche 1 bis 9, **dadurch gekennzeichnet, dass** die Kabeltasse mit einem in einem in den Kanal mündenden Schacht (16) vorgesehenen Klemmkasten (18) in Verbindung steht, der einen die Leitung aufnehmenden, mit der Kabeltasse kuppelbaren Ansatz (20) aufweist.

11. Einrichtung nach Anspruch 10, **dadurch gekennzeichnet, dass** der Klemmkasten (18) in seinem den Ansatz (20) aufweisenden Endbereich an seiner Außenseite mit einer gerundeten Führungsfläche (25) versehen ist.

12. Einrichtung nach Anspruch 11, **dadurch gekennzeichnet, dass** die Führungsfläche (25) durch seitlich abstehende Wangen (26) begrenzt ist.

13. Einrichtung nach Anspruch 10 oder 11, **dadurch gekennzeichnet, dass** der Klemmkasten (18) mit seitlich abstehenden Zapfen (27) versehen ist.

14. Einrichtung nach einem der Ansprüche 1 bis 13, **dadurch gekennzeichnet, dass** die Seitenwangen (2) eine Anzahl von, von einer Basis (30), insbesondere parallel zum Boden (1), abgehenden Stegen (31) aufweisen, wo zwei benachbarte Stege (31) jeweils eine Kammer (7) begrenzen.

15. Einrichtung nach einem der Ansprüche 1 bis 14, **dadurch gekennzeichnet, dass** im bodenfernen Endbereich der Seitenwange (2) bzw. der Basis (30) der Seitenwange (2) eine vorzugsweise senkrecht zum Boden (1) verlaufende Distanznase (32) bzw. ein Distanzflansch ausgebildet bzw. einstückig angeformt ist.

16. Einrichtung nach Anspruch 15, **dadurch gekennzeichnet, dass** die Distanznase vom bodenfernsten Steg in einem Winkel von maximal 20° zur Senkrechten geneigt, vorzugsweise senkrecht, abgeht.

17. Einrichtung nach einem der Ansprüche 1 bis 16, **dadurch gekennzeichnet, dass** an die Basis (30) ein vorzugsweise biegsamer bzw. nachgiebiger bzw. federnder Flansch (33) angeformt ist, der vorzugsweise in einem Winkel (34) von 0 bis 60° zum Boden (1) geneigt verläuft und im bodenfernen Bereich der Seitenwange (2) angeformt und zur jeweils gegenüberliegenden Seitenwange (2) gerichtet ist bzw. abgeht.

## Claims

1. Device for supporting or guiding lines in channels, particularly in sewers, comprising a cable tray, which receives the lines, consists of individual segments (3) hinged to each other, and comprises each a bottom (1), from which lateral cheeks (2) project, **characterised in that** the bottoms (1), which preferably consist of sheet metal, are hinged each to adjacent segments (3) about axes which extend substantially perpendicularly to the plane of the bottoms (1), and that the projecting lateral cheeks (2) are formed from a flexible material, preferably plastic material, and comprise lateral slots (5), which receive the lateral borders (6) of the bottoms (1) of the segments (3).

2. Device according to claim 1, **characterised in that** the borders (6) of the bottoms of the segments (3), which are received by the slots (5), are curved in an arcuate manner.

3. Device according to claim 1 or 2, **characterised in that** respective adjacent segments (3) are interconnected by hollow rivets (4), and are pivotal about the axis which extends substantially perpendicularly to the plane of the bottoms (1).

4. Device according to any of claims 1 to 3, **characterised in that** the hollow rivets (4) are permeated by fastening means, preferably by self-cutting screws (14), which may be anchored in the channel wall.

5. Device according to any of claims 1 to 4, **characterised in that** at least one lateral cheek (2) is provided with at least one chamber (7) passing in longitudinal direction of the line.

6. Device according to claim 5, **characterised in that** the chamber (7) has a lateral opening (9), which preferably may be closed at least in part by at least one elastic lip (8).

7. Device according to any of claims 1 to 6, **characterised in that** a spacer (12) is provided, which protrudes in the cable tray from the bottom (1) and preferably covers the hollow rivets (4).

8. Device according to claim 7, **characterised in that** the spacer (12) consists of hard foam material.

9. Device according to any of claims 1 to 8, **characterised in that** the self-cutting screw (14) is enclosed by a sealing compound (15), preferably of silicone, over a portion of its thread.

10. Device according to any of claims 1 to 9, **characterised in that** the cable tray is in connection to a clamping box (18) provided in a shaft (16), which ends in the channel, said box comprising a projection (20) which receives said line and may be coupled to the cable tray.

11. Device according to claim 10, **characterised in that** the clamping box (18), in its end region where said projection (20) is provided, and at the outer side, comprises a rounded guiding surface (25).

12. Device according to claim 11, **characterised in that** the guiding surface (25) is delimited by laterally protruding cheeks (26).

13. Device according to claim 10 or 11, **characterised in that** the clamping box (18) is provided with laterally protruding trunnions (27).

14. Device according to any of claims 1 to 13, **characterised in that** the lateral cheeks (2) have a number of webs (31) projecting from a base (30) and, in particular, extending parallel to the bottom (1), wherein two adjacent webs (31) delimit a respective chamber (7).

15. Device according to any of claims 1 to 14, **characterised in that** a spacer nose (32) or a spacer flange is formed or is integral with that end region of the lateral cheek (2), which is remote from the bottom, or on the base (30) of the lateral cheek (2), and extends preferably perpendicularly to the bottom (1).

16. Device according to claim 15, **characterised in that** the spacer nose projects from that web, which is most remote from the bottom, under an angle that is inclined to the vertical by 20° in maximum, and is preferably perpendicular to it.

17. Device according to any of claims 1 to 16, **characterised in that** a flange (33), being preferably flexible or resilient or springy, is formed to the base (30), which preferably extends in an inclined manner under an angle (34) of 0 to 60° to the bottom (1) and is formed on that region of the lateral cheek (2), which is remote from the bottom and is directed or projects towards the respective opposite lateral cheek (2).

## Revendications

1. Dispositif pour supporter ou guider des lignes dans des canaux, particulièrement des canaux des eaux d'égout, comprenant une tasse de câble, qui reçoit les lignes est consiste des segments (3) individuels reliés l'un à l'autre d'une manière articulée, et qui comprend un fond (1) respectif, duquel des jumelles (2) latérales font saillie, **caractérisé en ce, que** les fonds (1), de préférence consistant d'une tôle métallique, de chacun des segments (3) voisins sont relié l'un à l'autre d'une manière articulée pivotant autour des axes, qui s'étendent perpendiculairement au plan des fonds (1), et que les jumelles (2) latérales, qui font saillie, sont formées d'un matériau flexible, de préférence d'un matériau synthétique, et comprennent des fentes latérales (5), dans lesquelles les bords latéraux (6) des fonds (1) des segments (3) sont tenus.

2. Dispositif selon la revendication 1, **caractérisé en ce, que** les bords (6) des fonds des segments (3), tenus par les fentes (5), sont voûtés en arc.

3. Dispositif selon la revendication 1 ou 2, **caractérisé en ce, que** les segments (3) respectivement voisins l'un à l'autre sont reliés l'un à l'autre par des rivets creux (4) de façon, qu'ils sont pivotants autour de l'axe de ceux-ci, qui s'étend à peu près perpendiculairement au plan des fonds (1).

4. Dispositif selon une quelconque des revendications 1 à 3, **caractérisé en ce, que** les rivets creux (4) sont traversés des moyens de fixation, préférablement des vis autotaraudeuses (14), qui peuvent être ancrés dans la paroi de canal (13).

5. Dispositif selon une quelconque des revendications 1 à 4, **caractérisé en ce, qu'**au moins une jumelle (2) latérale est pourvue d'au moins une chambre, qui passe en direction longitudinale de la ligne.

6. Dispositif selon la revendication 5, **caractérisé en ce, que** la chambre (7) comprend une ouverture (9) latérale, dont au moins une partie, de préférence, peut être fermée au moins en partie par au moins une lèvre (8) élastique.

7. Dispositif selon une quelconque des revendications 1 à 6, **caractérisé en ce, qu'**une entretoise (12) est prévue dans la tasse de câble et fait saillie du fond (1), préférablement en couvrant les rivets creux (4).

8. Dispositif selon la revendication 7, **caractérisé en ce, que** l'entretoise (12) consiste de mousse à haute résistance.

9. Dispositif selon une quelconque des revendications 1 à 8, **caractérisé en ce, que** la vis autotaraudeuse (14), le long d'un morceau du filetage, est entourée d'un matériau d'étanchéité, préférablement du silicone.

10. Dispositif selon une quelconque des revendications 1 à 9, **caractérisé en ce, que** la tasse de câble est en connexion avec une boîte de serrage (18) prévue dans cheminée (16), qui débouche dans le canal, ladite boîte étant pourvue d'une saillie (20), qui tient la ligne, et qui peut être accouplée à la tasse de câble.

11. Dispositif selon la revendication 10, **caractérisé en ce, que** la boîte de serrage (18), dans cette zone terminale, qui présente la saillie (20) et à son côté extérieur, est pourvue d'une surface arrondie de guidage (25).

12. Dispositif selon la revendication 11, **caractérisé en ce, que** la surface de guidage (25) est délimitée par des jumelles (26), qui font latéralement saillie.

13. Dispositif selon la revendication 10 ou 11, **caractérisé en ce, que** la boîte de serrage (18) est pourvue des tourillons (27), qui font latéralement saillie.

14. Dispositif selon une quelconque des revendications 1 à 13, **caractérisé en ce, que** les jumelles (2) latérales comprennent un nombre des nervures (31), qui font saillie à partir d'une base (30), particulièrement parallèles au fond (1), où deux nervures (31) voisines délimitent une chambre (7) respective.

15. Dispositif selon une quelconque des revendications 1 à 14, **caractérisé en ce, que** dans cette zone terminale de la jumelle (2) latérale, qui est éloignée du fond, ou à la base de la jumelle (2) latérale, un talon d'écartement (32) ou un épaulement d'écartement est formé ou intégral, qui s'étend de préférence perpendiculairement au fond (1).

16. Dispositif selon la revendication 15, **caractérisé en ce, que** l'épaulement d'écartement fait saillie de la nervure, qui est la plus éloignée du fond, sous un angle de 20° en maximum à la verticale, de préférence perpendiculairement.

17. Dispositif selon une quelconque des revendications 1 à 16, **caractérisé en ce, qu'**un épaulement (33), de préférence flexible ou souple ou élastique, est formé à la base (30), qui, de préférence, s'étend d'une manière inclinée sous un angle (34) de 0 à 60° vers le fond (1), est formé dans cette zone de la jumelle (2) latérale, qui est éloigné du fond, et est orienté ou fait saillie vers la jumelle (2) latérale respective, qui est opposé.
